# EUROPÄISCHE PATENTSCHRIFT

(11) **EP 3 703 333 B1**
(45) Veröffentlichungstag und Bekanntmachung des Hinweises auf die Patenterteilung: **26.07.2023**
(21) Anmeldenummer: 20154072.1
(22) Anmeldetag: 28.01.2020
(51) Int. Cl.: H04L 9/40, H04W 4/42, H04L 9/00, H04W 12/106, H04W 12/108, H04W 12/61

(54) **VERFAHREN, VORRICHTUNG UND ANLAGE ZUR VERARBEITUNG WENIGSTENS EINER INFORMATION IN EINER SICHERHEITSTECHNISCHEN ANLAGE**
METHOD, APPARATUS AND SYSTEM FOR PROCESSING AT LEAST ONE INFORMATION ITEM IN A SAFETY SYSTEM
PROCÉDÉ, DISPOSITIF ET SYSTÈME DE TRAITEMENT D'AU MOINS UNE INFORMATION DANS UNE INSTALLATION TECHNIQUE DE SÉCURITÉ

(30) Priorität: 27.02.2019 DE 102019202624
(43) Veröffentlichungstag der Anmeldung: 02.09.2020
(73) Patentinhaber: Siemens Mobility GmbH, 81739 München (DE)
(72) Erfinder: Braband, Jens, 38106 Braunschweig (DE)
(74) Vertreter: Siemens Patent Attorneys

(56) Entgegenhaltungen:
- US-A1- 2017 075 938
- MICHAEL KUPERBERG ET AL: "Are Smart Contracts and Blockchains Suitable for Decentralized Railway Control?", ARXIV.ORG, CORNELL UNIVERSITY LIBRARY, 201 OLIN LIBRARY CORNELL UNIVERSITY ITHACA, NY 14853, 18. Januar 2019 (2019-01-18), XP081005537,
- CHEN LIN ET AL: "On Security Analysis of Proof-of-Elapsed-Time (PoET)", 7. Oktober 2017 (2017-10-07), PERVASIVE: INTERNATIONAL CONFERENCE ON PERVASIVE COMPUTING; [LECTURE NOTES IN COMPUTER SCIENCE; LECT.NOTES COMPUTER], SPRINGER, BERLIN, HEIDELBERG, PAGE(S) 282 - 297, XP047479393, ISBN: 978-3-642-17318-9 [gefunden am 2017-10-07] * Absatz [02.2] *

## Beschreibung

Die Erfindung betrifft ein Verfahren zur Verarbeitung wenigstens einer Information in einer sicherheitstechnischen Anlage, bei dem wenigstens eine Information in einer verteilten Datenbank zu einem Speicherzeitpunkt abgespeichert wird.

Die Erfindung betrifft weiterhin eine sicherheitstechnische Anlage, insbesondere eisenbahntechnische Anlage, mit wenigstens einem Datennetzwerk, mit mehreren Teilnehmern einer verteilten Datenbank, die über das Datennetzwerk miteinander verbunden sind, und mit wenigstens einer Information, die in der verteilten Datenbank zu einem Speicherzeitpunkt abgespeichert worden ist.

Aus der US 2017/0075938 A1 ist ein Verfahren und ein System zum Verifizieren von Daten bekannt, bei denen ein Baum aus Hashwerten verwendet wird.

In sicherheitstechnischen Anlagen, beispielsweise einer eisenbahntechnischen Anlage, ist das Ablegen von bestimmten Informationen in einer verteilten Datenbank, insbesondere mit Hilfe der Blockchain-Technologie, bekannt. Dieses Ablegen von Informationen in verteilten Datenbanken wird verwendet, wenn ein nachträgliches Manipulieren der Information durch nicht vertrauenswürdige Teilnehmer verhindert werden soll. Dabei wird das Ablegen dieser Information in der verteilten Datenbank beispielsweise durch die Benutzung eines sogenannten Proof-of-Work-Verfahrens verifiziert. Allerdings muss eine neu in der Blockchain abgelegte Information erst an alle Teilnehmer verteilt werden, bis alle Teilnehmer auf dem gleichen Stand sind. Bei einer Blockchain können beispielsweise auch zwei konkurrierende Blockchains entstehen, die sich erst nach einer gewissen Zeit wieder auflösen. Durch diese mangelnde Integrität einer abgelegten Information kann die Technologie der verteilten Datenbank bzw. Blockchain in der Sicherheitstechnik nicht ohne weiteres eingesetzt werden.

Es ist daher die Aufgabe der vorliegenden Erfindung, das oben genannte Verfahren und die oben genannte Anlage so weiter zu entwickeln, dass eine höhere Integrität der Information gewährleistet werden kann.

Für das eingangs genannte Verfahren wird die Aufgabe erfindungsgemäß dadurch gelöst, dass der Speicherzeitpunkt der Information abgespeichert wird und bei einer Verwendung der Information zumindest berücksichtigt wird, ob eine vorbestimmte Zeitspanne ab dem Speicherzeitpunkt vergangen ist, wobei die vorbestimmte Zeitspanne für eine Integrität der Information repräsentativ ist.

Für die eingangs genannte sicherheitstechnische Anlage wird die Aufgabe erfindungsgemäß dadurch gelöst, dass der Speicherzeitpunkt der Information abgespeichert ist und wenigstens ein Teilnehmer ausgebildet ist, die Information erst zu verwenden, wenn eine vorbestimmte Zeitspanne ab dem Speicherzeitpunkt vergangen ist, wobei die vorbestimmte Zeitspanne für eine Integrität der Information repräsentativ ist.

Die erfindungsgemäße Lösung hat den Vorteil, dass auf einfache Weise sichergestellt werden kann, dass eine bestimmte Integritätsanforderung für die betreffende Information auf einfache Weise überprüft werden kann. Dabei wird der Speicherzeitpunkt der Information festgehalten und beispielsweise ebenfalls in der verteilten Datenbank gespeichert. Dadurch kann bei der Verwendung der Information berücksichtigt werden, ob die vorbestimmte Zeitspanne ab dem Speicherzeitpunkt vergangen ist. Die vorbestimmte Zeitspanne ist repräsentativ für eine gewünschte Integrität der gegebenenfalls sicherheitsrelevanten Information. Die Integrität der Information kann durchaus unterschiedlich sein, was erfindungsgemäß ebenfalls berücksichtigt werden kann. Eine solche Integritätsanforderung kann beispielsweise eine Einstufung nach SIL1 bis SIL4 sein.

Die erfindungsgemäße Lösung kann durch vorteilhafte Ausgestaltung weiterentwickelt werden, die im Folgenden beschrieben sind.

So kann in einer vorteilhaften Ausgestaltung des erfindungsgemäßen Verfahrens die Information in der verteilten Datenbank in einer Blockchain abgespeichert werden. Die Blockchain-Technologie ist für die Sicherheitstechnik besonders geeignet, weil die Information in der Blockchain nachträglich nicht manipulierbar abgelegt ist.

Um sicherzustellen, dass nur berechtigte Teilnehmer Informationen in der verteilten Datenbank ablegen, kann die abgespeicherte Informationen mittels eines Proof-of-Work-Verfahrens verifiziert werden.

Ferner können Teilnehmer der verteilten Datenbank bei einer zentralen Autorität per PKI (Public Key Infrastructure)-Verfahren identifiziert werden. Dies hat den Vorteil, dass das PKI-Verfahren weit verbreitet und einfach anwendbar ist.

Um die Sicherheit des Verfahrens zu erhöhen, kann einer zentralen Autorität einer Anzahl der Teilnehmer der verteilten Datenbank bekannt sein. Als zentrale Autorität kann z. B. die Leitstelle einer eisenbahntechnischen Anlage dienen.

Um die Integrität der Information durch jeden Teilnehmer individuell überprüfbar zu machen, kann zu der Information eine von der Zeitspanne abhängige Funktion verteilt werden, mittels der eine Integrität der Information überprüfbar ist. Ferner kann die vorbestimmte Zeitspanne in Abhängigkeit von der Art der Information festgelegt werden. Dies hat den Vorteil, dass jeder Teilnehmer, der die Art der Information kennt, die Integrität überprüfen kann. Die gültigen Integritätsanforderung kann beispielsweise ein SIL oder eine Ausfallrate bzw. Ausfallwahrscheinlichkeit sein.

Um den Aufwand der Integritätsprüfung zu verringern, kann ein für mehrere lokal abgespeicherte Informationen repräsentativer Statuswert, insbesondere Hashwert, von mindestens einigen Teilnehmern der verteilten Datenbank zyklisch verteilt werden. Der repräsentative Statuswert ist hierbei insbesondere der Hashwert der aktuellen Blockchain jedes Teilnehmers, den dieser beispielsweise als Broadcast im Datennetzwerk verteilt. Wenn ein anderer Teilnehmer unterschiedliche Statuswerte von unterschiedlichen Teilnehmern empfängt, ist dies ein Zeichen dafür, dass unterschiedliche Blockchains im Datennetzwerk vorhanden sind. In diesem Fall muss erfindungsgemäß überprüft werden, ob die vorbestimmte Zeitspanne vergangen ist. Dies hat den Vorteil, dass die Integritätsüberprüfung nach dem erfindungsgemäßen Verfahren nicht von allen Teilnehmern des Datennetzwerks permanent durchgeführt werden muss und dadurch die Effektivität erhöht wird.

Die Erfindung betrifft auch einen Teilnehmer für ein Datennetzwerk einer sicherheitstechnischen Anlage, wobei der Teilnehmer zur Verwendung wenigstens einer Information ausgebildet ist, die in einer verteilten Datenbank zu einem Speicherzeitpunkt abgespeichert ist. Um die Integrität der Information zu erhöhen, ist erfindungsgemäß vorgesehen, dass der Teilnehmer ausgebildet ist, bei der Verwendung der Information zu berücksichtigen, ob eine vorbestimmte Zeitspanne ab dem Speicherzeitpunkt vergangen ist, wobei die vorbestimmte Zeitspanne für eine Integrität der Information repräsentativ ist.

Schließlich betrifft die Erfindung ein Computerprogramm mit Instruktionen, die bei Ausführung des Computerprogramms durch wenigstens einen Computer bewirken, dass der Computer das Verfahren nach einem der oben genannten Ausführungsformen ausführt.

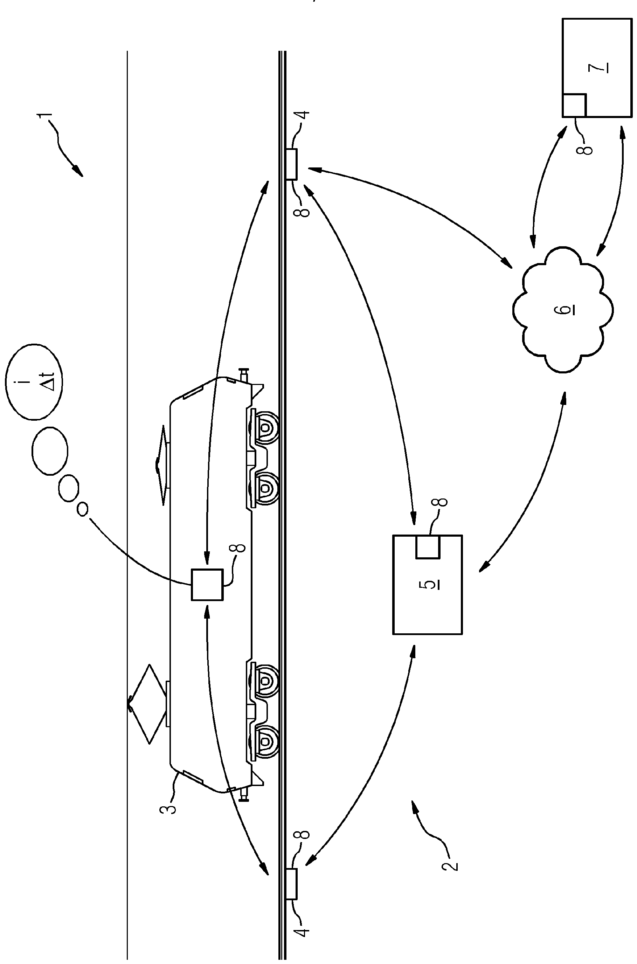

Im Folgenden wird die Erfindung mit Bezug auf die beigefügte Figur erläutert, die eine schematische Darstellung einer beispielhaften Ausführungsform einer erfindungsgemäßen sicherheitstechnischen Anlage zeigt.

In der einzigen Figur ist eine eisenbahntechnische Anlage 1 als ein Beispiel für eine erfindungsgemäße sicherheitstechnische Anlage dargestellt.

Die eisenbahntechnische Anlage 1 weist ein Datennetzwerk 2, Fahrzeuge 3, Streckenelemente 4, ein Stellwerk 5 und eine über eine Cloud 6 verbundene Leitstelle 7 auf. Die verschiedenen Komponenten weisen jeweils einen Rechner 8 auf, der jeweils mit dem Datennetzwerk 2 verbunden ist. Die Rechner 8 stellen hier Teilnehmer des Datennetzwerks 2 dar. Die Rechner 8 bilden zusammen eine verteilte Datenbank aus, die mit Hilfe der Blockchain-Technologie betrieben wird und in der eine Blockchain abgelegt ist. Im Folgenden werden die Teilnehmer als Rechner 8 bezeichnet, was aber keine Beschränkung bedeuten soll. Die Begriffe sind austauschbar.

Eine sicherheitskritische Information, wie beispielsweise der Zustand eines Streckenelements oder eine Position des Fahrzeugs 3, werden in der Blockchain abgespeichert. Jeder Rechner 8 ist im Beispiel der Figur auch Teilnehmer der Blockchain und identifiziert sich durch eine PKI (Public Key Infrastructure) und insbesondere durch einen Hashwert seines privaten Schlüssels. Die PKI jedes Teilnehmers ist durch eine zentrale Autorität zertifiziert. Die Rolle der zentralen Autorität übernimmt hier beispielsweise die Leitstelle 7.

Wenn ein Teilnehmer eine neue Information in der Blockchain ablegen will, erzeugt er einen neuen Block mit der darin abgelegten Information. Verifiziert wird der neue Block durch einen sogenannten Proof-of-Work-Algorithmus. Beim Proof-Work-Verfahren wird beispielsweise ein kryptographisches Puzzle durch den erstellenden Teilnehmer bzw. Rechner gelöst und dadurch die Echtheit des neuen Blocks gezeigt.

Weiterhin ist erfindungsgemäß auch im Nachhinein bekannt, zu welchem Zeitpunkt welche Informationen in der Blockchain abgelegt wurden. Bei dem Ausführungsbeispiel in der Figur wird dieser Speicherzeitpunkt der Information von dem betreffenden Teilnehmer, der den neuen Block mit der Information erzeugt, mit in der Blockchain abgespeichert. Dadurch kann jeder Teilnehmer, der eine Information aus der Blockchain ausliest, bei einer Verwendung der Information berücksichtigen, ob eine vorbestimmte Zeitspanne ab dem Speicherzeitpunkt vergangen ist.

Die zentrale Autorität kann zusätzlich eine authentisierte Funktion D(t) verteilen, die eine Determiniertheit der Information der Blockchain als Funktion der Zeitspanne t der Information angibt.

Bei der in der Figur beispielhaft dargestellten Ausführungsform nehmen alle Teilnehmer aktiv an der Blockchain teil, d. h. als sogenannte Miner, die auch neue Blöcke erstellen können. Es könnte alternativ aber auch Teilnehmer geben, die nur Informationen aus der Blockchain auslesen können, aber keine neuen Blöcke erstellen. Die Teilnehmer können jeweils zu jeder Information in der Blockchain eine gültige Integritätsanforderung I(T) bestimmen. Dies kann sowohl vom Teilnehmer als auch von der Information selbst abhängen. Die Integritätsanforderung kann beispielsweise ein SIL sein oder auch eine Ausfallrate bzw. Ausfallwahrscheinlichkeit.

Im Betrieb ruft nun ein Teilnehmer eine bestimmte Information i aus der Blockchain ab und kennt den Typ der Information und damit die zugehörige Integritätsanforderung I(T). Jeder Teilnehmer weist eine interne Uhr auf, anhand der er die Zeitspanne ab dem Speicherzeitpunkt für jede Information bestimmen kann, die als Δt bezeichnet werden kann. Der Teilnehmer wertet die abgerufene Information nur dann als integer und verwendet sie weiter, wenn die berechnete Zeitspanne größer oder gleich einer vorbestimmten für die Integritätsanforderung I(T) nötige Zeitspanne ist. Anders ausgedrückt muss I(T)≥D(Δt) gelten. Ist dies nicht der Fall, wartet der Teilnehmer gegebenenfalls mit der Verarbeitung oder stoppt diese.

Um den Rechenaufwand der Teilnehmer zu minimieren und um zu vermeiden, dass jeder Teilnehmer für jede Information die erfindungsgemäße Überprüfung der vorbestimmten Zeitspanne durchführt, kann Folgendes durchgeführt werden:
Jeder Teilnehmer verteilt innerhalb des Datennetzwerks zyklisch, beispielsweise jede Sekunde, einen Hashwert seiner aktuellen Blockchain. Dies kann beispielsweise sehr einfach als Broadcast-Signal verbreitet werden. Der Hashwert identifiziert die Version der Blockchain eindeutig. Dadurch empfängt jeder Teilnehmer permanent Hashwerte von den übrigen Teilnehmern, die er miteinander vergleichen kann. Wenn innerhalb eines bestimmten Zeitfensters wenigstens zwei unterschiedliche Hashwerte empfangen wurden, ist dies ein Zeichen für unterschiedliche Versionen der Blockchain innerhalb des Datennetzwerks. In diesem Fall muss eine Überprüfung der vorbestimmten Zeitspanne durch das erfindungsgemäße Verfahren zwingend durchgeführt werden. Wenn alle Hashwerte gleich sind, kann aber darauf verzichtet werden. Das Zeitfenster für die Überprüfung der Hashwerte sollte eine gewisse Verzögerung, also eine bestimmte zeitliche Länge, besitzen, die in der Regel mindestens die mittlere Zeit beträgt, die die Erzeugung eines neuen Blocks dauert. Hierdurch wird verhindert, dass es bei jedem neu erstellten Block zu unterschiedlichen Hashwerten kommt.

## Patentansprüche

1. Verfahren zur Verarbeitung wenigstens einer Information
(i) in einer sicherheitstechnischen Anlage (1) mit wenigstens einem Datennetzwerk und mit mehreren Rechnern darstellend Teilnehmer einer verteilten Datenbank, die über das Datennetzwerk verbunden sind, bei dem die wenigstens eine Information (i) in der verteilten Datenbank zu einem Speicherzeitpunkt und der Speicherzeitpunkt der Information (i) abgespeichert werden,
wobei der Speicherzeitpunkt der Information (i) bei einer Verwendung der Information (i) zumindest berücksichtigt wird, ob eine vorbestimmte Zeitspanne (Δt) ab dem Speicherzeitpunkt vergangen ist, wobei die Information erst verwendet wird, wenn die vorbestimmte Zeitspanne ab dem Speicherzeitpunkt vergangen ist, wobei die vorbestimmte Zeitspanne (Δt) für eine Integrität der Information (i) repräsentativ ist.

2. Verfahren nach Anspruch 1,
**dadurch gekennzeichnet, dass** die Information (i) in der verteilten Datenbank in einer Blockchain abgespeichert wird.

3. Verfahren nach Anspruch 1 oder 2,
**dadurch gekennzeichnet, dass** die abgespeicherte Information (i) mittels eines Proof of Work Verfahrens verifiziert wird.

4. Verfahren nach einem der oben genannten Ansprüche,
**dadurch gekennzeichnet, dass** Teilnehmer der verteilten Datenbank bei einer zentralen Autorität per PKI (Public Key Infrastructure) Verfahren identifiziert werden.

5. Verfahren nach einem der oben genannten Ansprüche,
**dadurch gekennzeichnet, dass** einer zentralen Autorität eine Anzahl der Teilnehmer der verteilten Datenbank bekannt ist.

6. Verfahren nach einem der oben genannten Ansprüche,
**dadurch gekennzeichnet, dass** zu der Information (i) eine von der Zeitspanne (Δt) abhängige Funktion verteilt wird, mittels der eine Integrität der Information (i) überprüfbar ist.

7. Verfahren nach einem der oben genannten Ansprüche,
**dadurch gekennzeichnet, dass** die vorbestimmte Zeitspanne Δt in Abhängigkeit von der Art der Information (i) festgelegt wird.

8. Verfahren nach einem der oben genannten Ansprüche,
**dadurch gekennzeichnet, dass** ein für mehrere lokal abgespeicherte Informationen (i) repräsentativer Statuswert, insbesondere Hashwert, von zumindest einigen Teilnehmern der verteilten Datenbank zyklisch verteilt wird.

9. Computerprogramm mit Instruktionen, die bei Ausführung des Computerprogramms durch wenigstens einen Computer bewirken, dass der Computer das Verfahren nach einem der oben genannten Ansprüche 1 bis 8 ausführt.

10. Rechner darstellend einen Teilnehmer für ein Datennetzwerk einer sicherheitstechnischen Anlage mit mehreren Teilnehmern einer verteilten Datenbank, die über das Datennetzwerk verbunden sind,
wobei der Teilnehmer zur Verwendung wenigstens einer Information (i) ausgebildet ist, die in einer verteilten Datenbank zu einem Speicherzeitpunkt und der Speicherzeitpunkt der Information abgespeichert sind, wobei der Teilnehmer ausgebildet ist, bei der Verwendung der Information (i) zu berücksichtigen, ob eine vorbestimmte Zeitspanne (Δt) ab dem Speicherzeitpunkt vergangen ist und die Information erst zu verwenden, wenn die vorbestimmte Zeitspanne ab dem Speicherzeitpunkt vergangen ist, wobei die vorbestimmte Zeitspanne (Δt) für eine Integrität der Information (i) repräsentativ ist.

11. Sicherheitstechnische Anlage (1), insbesondere eisenbahntechnische Anlage,
mit wenigstens einem Datennetzwerk (2), mit mehreren Rechnern darstellend Teilnehmern einer verteilten Datenbank, die über das Datennetzwerk (2) verbunden sind, und mit wenigstens einer Information (i), die in der verteilten Datenbank zu einem Speicherzeitpunkt abgespeichert worden ist,
wobei der Speicherzeitpunkt der Information (i) abgespeichert ist und wenigstens ein Teilnehmer ausgebildet ist, bei der Verwendung der Information zu berücksichtigen, ob eine vorbestimmte Zeitspanne ab dem Speicherzeitpunkt vergangen ist und die Information (i) erst zu verwenden, wenn die vorbestimmte Zeitspanne (Δt) ab dem Speicherzeitpunkt vergangen ist wobei die vorbestimmte Zeitspanne (Δt) für eine Integrität der Information (i) repräsentativ ist.

## Claims

1. Method for processing at least one item of information (i) in a safety-related installation (1) with at least one data network and with a plurality of computers representing participants in a distributed database, which are connected via the data network,
in which the at least one item of information (i) is stored in the distributed database at a storage time and the storage time of the information (i) is stored,
wherein the storage time of the information (i) is at least taken into consideration when the information (i) is used, whether a predetermined time span (Δt) has passed since the storage time, wherein the information is first used when the predetermined time span since the storage time has passed, wherein the predetermined time span (Δt) is representative of an integrity of the information (i).

2. Method according to claim 1,
**characterised in that**
the information (i) is stored in the distributed database in a blockchain.

3. Method according to claim 1 or 2,
**characterised in that**
the stored information (i) is verified by means of a proof of work method.

4. Method according to one of the preceding claims,
**characterised in that**
participants in the distributed database are identified with a central authority using PKI (Public Key Infrastructure) methods.

5. Method according to one of the preceding claims,
**characterised in that**
a number of the participants in the distributed database is known to a central authority.

6. Method according to one of the preceding claims,
**characterised in that**
regarding the information (i), a function dependent upon the time span (Δt) is distributed, by means of which an integrity of the information (i) can be reviewed.

7. Method according to one of the preceding claims,
**characterised in that**
the predetermined time span Δt is specified depending upon the kind of information (i).

8. Method according to one of the preceding claims,
**characterised in that**
a status value which is representative of a plurality of locally stored items of information (i), in particular a hash value, of at least some participants in the distributed database is cyclically distributed.

9. Computer program with instructions which, when the computer program is executed by at least one computer, cause the computer to carry out the method according to one of the preceding claims 1 to 8.

10. Computer representing a participant for a data network of a safety-related installation with a plurality of participants in a distributed database, which are connected via the data network,
wherein the participant is embodied to use at least one item of information (i), which are stored in a distributed database at a storage time and the storage time of the information is stored, wherein
the participant is embodied, when the information (i) is used, to take into consideration whether a predetermined time span (Δt) has passed since the storage time and to only use the information when the predetermined time span has passed since the storage time, wherein the predetermined time span (Δt) is representative of an integrity of the information (i).

11. Safety-related installation (1), in particular railway-engineering installation,
with at least one data network (2), with a plurality of computers representing participants in a distributed database, which are connected via the data network (2),
and with at least one item of information (i), which has been stored in a distributed database at a storage time,
wherein the storage time of the information (i) is stored and at least one participant is embodied, when the information is used, to take into consideration whether a predetermined time span has passed since the storage time and to only use the information (i) when the predetermined time span (Δt) has passed since the storage time, wherein the predetermined time span (Δt) is representative of an integrity of the information (i) .

## Revendications

1. Procédé de traitement d'au moins une information (i) dans une installation (1) de la technique de sécurité comprenant au moins un réseau de données et des participants, représentant plusieurs ordinateurs, d'une base de données répartie, qui sont reliés par le réseau de données,
dans lequel on met en mémoire la au moins une information (i) dans la base de données répartie à un instant de mise en mémoire et on mémorise l'instant de mise en mémoire de l'information (i),
dans lequel on prend en compte au moins l'instant de mise en mémoire de l'information (i), lors d'une utilisation de l'information (i), si un laps de temps (Δt) déterminé à l'avance s'est écoulé depuis l'instant de mise en mémoire, dans lequel on n'utilise l'information que si le laps de temps déterminé à l'avance depuis l'instant de mise en mémoire s'est écoulé,
dans lequel le laps de temps (Δt) déterminé à l'avance est représentatif de l'intégrité de l'information (i).

2. Procédé suivant la revendication 1,
**caractérisé en ce que**
l'on met l'information (i) en mémoire dans la base de données répartie dans une blockchain.

3. Procédé suivant la revendication 1 ou 2,
**caractérisé en ce que**
l'on vérifie l'information (i) mise en mémoire au moyen d'un procédé proof of work.

4. Procédé suivant l'une des revendications précédentes,
**caractérisé en ce que**
l'on identifie des participants de la base de données répartie auprès d'une autorité centrale par un procédé PKI (public key infrastructure)

5. Procédé suivant l'une des revendications précédentes,
**caractérisé en ce qu'**
un nombre des participants de la base de donnée répartie est connu de l'autorité centrale.

6. Procédé suivant l'une des revendications précédentes,
**caractérisé en ce que**
l'on répartit, en plus de l'information (i), une fonction, qui dépend du laps de temps (Δt) et au moyen de laquelle une intégrité de l'information (i) peut être contrôlée.

7. Procédé suivant l'une des revendications précédentes,
**caractérisé en ce que**
l'on fixe le laps de temps Δt déterminé à l'avance en fonction du type de l'information (i).

8. Procédé suivant l'une des revendications précédentes,
**caractérisé en ce que**
l'on répartit, de manière cyclique, par au moins certains participants de la base de données répartie, un valeur de statut représentative de plusieurs informations (i) mises en mémoire localement, en particulier une valeur de Hash

9. Programme d'ordinateur comprenant des instructions, qui, à la réalisation du programme d'ordinateur, par au moins un ordinateur, font que l'ordinateur exécute le procédé suivant l'une des revendications 1 à 8 précédentes.

10. Ordinateur, représentant un participant pour un réseau de données d'une installation de la technique de sécurité, comprenant plusieurs participants d'une base de données répartie, qui sont reliés par le réseau de données,
dans lequel le participant est constitué pour l'utilisation d'au moins une information (i), qui est mise en mémoire dans une base de données répartie à un instant de mémoire et l'instant de mise en mémoire de l'information est mis en mémoire,
dans lequel le participant est constitué pour prendre en compte, lors de l'utilisation de l'information (i), si un laps de temps (Δt) déterminé à l'avance s'est écoulé depuis l'instant de mise en mémoire et pour n'utiliser l'information que si le laps de temps défini depuis l'instant de mise en mémoire s'est écoulé, dans lequel le laps de temps (Δt) défini à l'avance est représentatif d'une intégrité de l'information (i).

11. Installation (1) de la technique de sécurité, en particulier installation de la technique des chemins de fer,
comprenant au moins un réseau (2) de données ayant plusieurs participants représentant des ordinateurs d'une base de données répartie, qui sont reliés par le réseau (2) de données,
et comprenant au moins une information (i), qui a été mise en mémoire dans la base de données répartie à un instant de mise en mémoire,
dans laquelle l'instant de mise en mémoire de l'information est mis en mémoire et au moins un participant est constitué pour prendre en compte, lors de l'utilisation de l'information, si un laps de temps déterminé à l'avance depuis l'instant de mise en mémoire s'est écoulé et pour n'utiliser l'information (i) que si le laps de temps (Δt) déterminé à l'avance depuis l'instant de mise en mémoire s'est écoulé, dans lequel le laps de temps (Δt) déterminé à l'avance est représentatif de l'intégrité de l'information (i).
